# FASCICULE DE BREVET EUROPEEN

(11) **EP 0 588 699 B1**
(45) Date de publication et mention de la délivrance du brevet: **21.01.1998**
(21) Numéro de dépôt: 93402216.1
(22) Date de dépôt: 13.09.1993
(51) Int. Cl.: B60R 25/10

(54) **Dispositif de protection de véhicules ou mobiles**
Diebstahlsicherungseinrichtung für Fahrzeuge
Vehicle protection device

(30) Priorité: 14.09.1992 FR 9211019
(43) Date de publication de la demande: 23.03.1994
(73) Titulaire: Biasoli, Gilbert, F-13920 St Mitre les Remparts (FR)
(72) Inventeur: Biasoli, Gilbert, F-13920 St Mitre les Remparts (FR)
(74) Mandataire: Ravina, Bernard

(56) Documents cités:
- EP-A- 0 251 457
- EP-A- 0 366 378
- EP-A- 0 387 581
- EP-A- 0 449 471
- WO-A-91/05682
- GB-A- 2 198 270
- US-A- 5 027 104

## Description

La présente invention concerne un dispositif d'alarme pour véhicules. Elle s'adapte en particulier à la surveillance d'automobiles par leur utilisateur ou de tout mobile tels que des bateaux.

Les dispositifs d'alarme actuellement connus consistent généralement en un détecteur d'intrusion dans le véhicule et en un émetteur de sons de forte intensité. Leur efficacité est limitée car les témoins de l'effraction s'habituent aux erreurs de manipulation des utilisateurs légitimes ou des défauts de fonctionnement, par exemple au soleil de ces systèmes. Les utilisateurs légitimes des véhicules peuvent par ailleurs être à une trop grande distance de leur véhicule pour en entendre l'alarme ou pour réagir à cette alarme.

Le brevet WO A 91/05682 décrit un dispositif de protection de véhicules ou de mobiles comportant un détecteur d'intrusion dans le véhicule, un premier émetteur hertzien relié au détecteur et un récepteur porté par l'utilisateur.

Le premier émetteur hertzien émet un signal prévu à l'avance pré-enregistré que l'utilisateur doit interpréter. Un générateur de message sonore dans le véhicule génère un signal d'alarme ou un message impersonnel pré-enregistré. Les messages et leur durée sont controlés par le programme.

Le brevet US A 5 027 104 décrit un système comprenant des caméras vidéo actionnées par une alarme et un micro-processeur et dont les images sont transmises à un poste fixe.

D'autres dispositifs d'alarme pour véhicule sont destinés à repérer un véhicule déjà volé, au passage de certaines bornes de réception ou par repérage par satellite. Ces dispositifs ne permettent donc pas de prévenir une effraction.

L'objet de la présente invention est de remédier à ces inconvénients en présentant un dispositif principalement électronique permettant de réagir instantanément et à distance pour dissuader l'intrus.
A cet effet, le dispositif objet de la présente invention est un dispositif de protection de véhicules comportant un détecteur d'intrusion dans le véhicule caractérisé en ce qu'il comporte une caméra vidéo ou un appareil photographique à capteur électronique interne au véhicule et en ce qu'il comporte un premier émetteur hertzien relié électriquement au détecteur d'intrusion et un premier récepteur hertzien portable adapté à recevoir les signaux émis par le premier émetteur hertzien.

Préférentiellement, le dispositif comporte de manière mobile et portable par l'utilisateur du véhicule un second émetteur hertzien et un second récepteur hertzien adapté à recevoir les signaux émis par le second émetteur hertzien et placé à l'intérieur du véhicule.
Les informations transmises par les émetteurs hertziens peuvent consister en des informations représentatives de sons, de messages ou en des informations représentatives d'images.

La description qui va suivre, faite en regard des dessins annexés dans un but explicatif et nullement limitatif permet de mieux comprendre les avantages, buts et caractéristiques de l'invention.

La figure 1 représente un premier mode de réalisation du dispositif à transmission sonore.

La figure 2 représente un second mode de réalisation du dispositif à transmission audio-visuelle.

La figure 3 représente un troisième mode de réalisation du dispositif à transmission de messages.

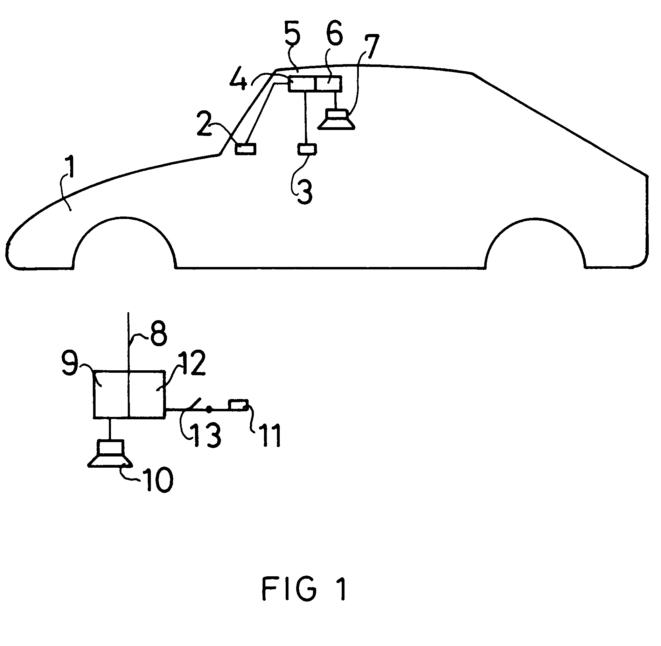

Dans la figure 1 sont représentés un véhicule 1 comportant un détecteur d'intrusion 2, un premier microphone 3, un premier émetteur récepteur 4, une première antenne hertzienne 5, un premier récepteur hertzien 6 et un premier haut-parleur 7 et à l'extérieur du véhicule 1, une seconde antenne hertzienne 8, un second récepteur hertzien 9, un second haut-parleur 10, un second microphone 11, un interrupteur 13 et un second émetteur hertzien 12.
Le véhicule 1 est par exemple de type automobile ou caravane.

Le détecteur d'intrusion 2 est de type connu, par exemple à radar, à hyper-fréquence ou à infra-rouge. Le détecteur d'intrusion 2 est adapté à émettre un signal électrique au premier émetteur hertzien 4 dés qu'il détecte une intrusion dans le véhicule 1.

Le premier microphone 3 est de type connu et est adapté à transmettre au premier émetteur hertzien 4 un signal électrique représentatif des sons à l'intérieur du véhicule 1.

Le premier émetteur hertzien 4 est de type connu et est adapté à moduler le signal provenant du premier microphone 3 sur une première fréquence porteuse à haute fréquence, uniquement lorsque le détecteur d'intrusion 2 émet un signal électrique d'intrusion et à transmettre le signal modulé à la première antenne hertzienne 5.

La première antenne hertzienne 5 est de type connu et est adaptée, d'une part, à émettre un champ électrique représentatif du signal électrique modulé qu'elle reçoit du premier émetteur hertzien 4 et d'autre part, à capter le champ électrique ambiant et à émettre un signal électrique représentatif de ce champ électrique vers le premier récepteur hertzien 6.

Le premier récepteur hertzien 6 est de type connu et est adapté à démoduler le signal provenant de la première antenne hertzienne 5 sur une seconde fréquence porteuse, à amplifier le signal démodulé et à le transmettre au premier haut-parleur 7.

Le premier haut-parleur 7 est de type connu et est adapté à émettre des sons représentatifs du signal démodulé qu'il reçoit du premier récepteur hertzien 6.

La seconde antenne hertzienne 8 est de même type que la première. Elle émet un champ électrique représentatif du signal électrique modulé qu'elle reçoit du second émetteur hertzien 12 d'une part, et d'autre part, elle capte le champ électrique ambiant et émet un signal électrique représentatif de ce champ électrique vers le second récepteur hertzien 9.

Le second récepteur hertzien 9 est de type connu et est adapté à démoduler le signal provenant de la seconde antenne hertzienne 8 sur la première fréquence porteuse, à amplifier le signal démodulé et à le transmettre au second haut-parleur 10.

Le second haut-parleur 10 est de type connu et est adapté à émettre des sons représentatifs du signal démodulé qu'il reçoit du second récepteur hertzien 9. Il peut cependant se présenter sous la forme d'un casque d'écoute.

Le second microphone 11 est de type connu et est adapté à transmettre au second émetteur hertzien 12 un signal électrique représentatif des sons ambiants uniquement lorsque l'interrupteur 13 est en position fermée.

Le second émetteur hertzien 12 est de type connu et est adapté à moduler le signal provenant du second microphone 11 sur la seconde fréquence porteuse à haute fréquence et à transmettre le signal modulé à la seconde antenne hertzienne 8.

Selon ce premier mode de réalisation, l'utilisateur du véhicule porte avec lui la seconde antenne hertzienne 8, le second récepteur hertzien 9, le second haut-parleur 10, le second microphone 11, l'interrupteur 13 et le second émetteur hertzien 12.

Lorsque le détecteur d'intrusion 2 se déclenche, l'utilisateur entend à travers le second haut-parleur 10, les sons captés par le premier microphone 3. Il peut donc juger l'opportunité de sa réaction.
En fermant l'interrupteur 13, il peut émettre des sons audibles dans le véhicule 1 et en particulier des messages dissuasifs pour l'intrus.

Il est à noter que la transmission hertzienne peut être limitée à une faible portée pour limiter l'utilisation des fréquences hertziennes par l'ensemble des utilisateurs.

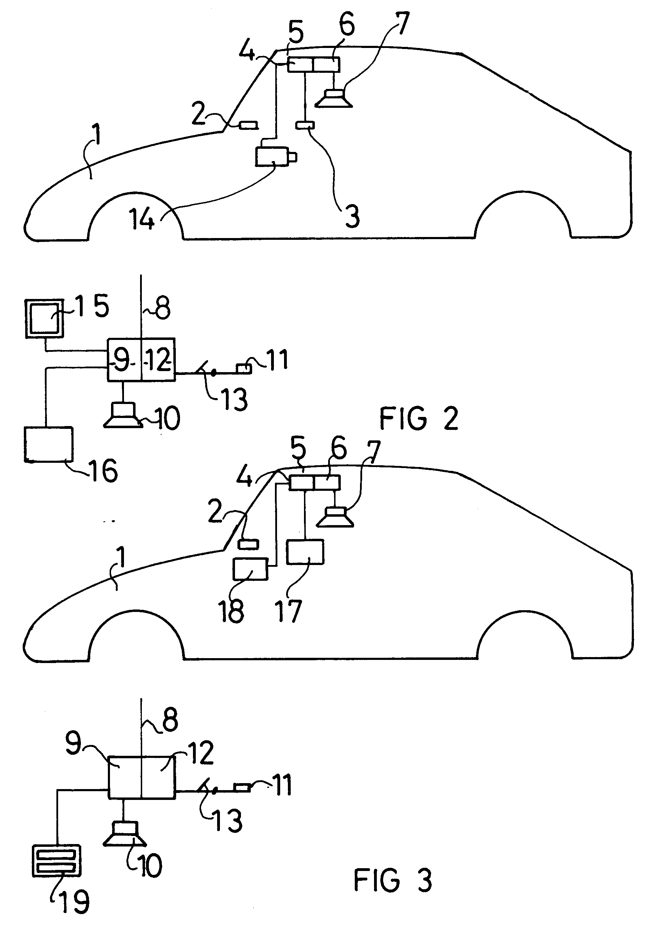

On retrouve dans la figure 2 les éléments de la figure 1 auxquels s'ajoutent dans le véhicule 1 une caméra électronique 14 et en dehors du véhicule 1, un moniteur vidéo 15 et une imprimante vidéo 16.

La caméra 14 est de type connu et par exemple, constituée d'une caméra vidéo ou d'un appareil photographique à capteur électronique, et est reliée d'une part au détecteur d'intrusion 2 et d'autre part, au premier émetteur hertzien 4. La caméra 14 est adaptée à prendre au moins une image électronique après avoir reçu un signal d'intrusion du détecteur d'intrusion 2 et à transmettre un signal représentatif de l'image captée au premier émetteur hertzien 4.

Le premier émetteur hertzien 4 possède les mêmes fonctions que celles présentées en regard de la figure 1 auxquelles s'ajoute la modulation du signal provenant de la caméra 14.

Le second récepteur hertzien 9 possède les mêmes fonctions que celles présentées en regard de la figure 1 auxquelles s'ajoutent la démodulation du signal provenant de la caméra 14 et la transmission de ce signal démodulé vers le moniteur vidéo 15 et l'imprimante vidéo 16.
Le moniteur vidéo 15 est de type connu, par exemple constitué d'un écran plat à cristaux liquides ou d'un petit tube cathodique.
L'imprimante vidéo 16 est de type connu et est adaptée à imprimer une image captée par la caméra 14.

Selon ce second mode de réalisation, l'utilisateur peut véfifier visuellement l'intrusion dans le véhicule 1 et obtenir immédiatement un portrait de l'intrus.
Il est à noter que l'imprimante vidéo 16 comporte préférentiellement une mémoire de plusieurs images de manière à conserver plusieurs portraits de l'intrus.

Dans la figure 3 sont représentés les éléments constituant la figure 1 à l'exception du premier microphone 3, auxquels s'ajoutent dans le véhicule 1, un générateur de messages sonores 17 et un générateur de messages écrits 18 et en dehors du véhicule 1, un récepteur de messages écrits 19.

Le générateur de messages sonores 17 est de type connu et est adapté à générer un signal électrique vers le premier émetteur hertzien 4 représentant un message sonore. Le message sonore généré par le générateur de messages sonores 17 peut comporter, d'une part, une identification du véhicule 1 et d'autre part, un message explicite indiquant l'affectation.

Le générateur de messages écrits 18 est de type connu et est adapté à émettre un signal électronique vers le premier émetteur hertzien 4.

Le récepteur de messages écrits 19 est adapté à afficher le signal écrit émis par le générateur de messages écrits 18.

Selon ce troisième mode de réalisation, l'utilisateur reçoit des messages d'intrusion sous plusieurs formes, écrites ou sonores.

Selon une variante de ce troisième mode de réalisation, le premier haut-parleur 7 émet le message sonore généré par le générateur de messages sonores 17 dés que le détecteur d'intrusion 2 émet un signe d'intrusion.
Les avantages des trois modes de réalisation du dispositif présentés en figures 1, 2 et 3 par rapport aux dispositifs actuellement connus sont les suivants :
- Les messages sonores émis par le premier haut-parleur 7 peuvent être perçus par l'intrus mais aussi par les personnes se trouvant à proximité du véhicule ;
- Aucune sirène n'est nécessaire et les déclenchements intempestifs ne perturbent pas le voisinage du véhicule ;
- L'intrus est surpris ;
- L'utilisateur du dispositif objet de la présente invention peut conserver un enregistrement sonore ou visuelle de l'intrus.

## Revendications

1. Dispositif de protection de véhicules ou mobiles (1) comportant dans le véhicule, un détecteur d'intrusion (2), un premier émetteur hertzien (4) relié électriquement au détecteur d'intrusion et émettant un signal hertzien lorsqu'il reçoit un signal d'intrusion en provenance du détecteur d'intrusion, un premier microphone (3) relié au premier émetteur hertzien (4), un premier récepteur hertzien (6) et un premier haut-parleur (7) relié au dit récepteur, et, à l'extérieur du véhicule, un second récepteur hertzien (9) portable adapté à recevoir les signaux émis par le premier émetteur hertzien (4), un second haut-parleur (7) relié au second récepteur hertzien (9) et un second émetteur hertzien (12) et un second microphone, les premier et second émetteurs et récepteurs étant en liaison par les antennes (5) et (8), caractérisé en ce qu'il comporte une caméra vidéo ou un appareil photographique à capteur électronique interne au véhicule et en ce que les premier et second émetteurs et les premier et second récepteurs sont établis pour fonctionner sur une première et une seconde fréquence, la première fréquence étant une fréquence porteuse de son, la deuxième étant une fréquence capable de transmettre un signal numérique modulé.

2. Dispositif selon la revendication 1 caractérisé en ce que le déclenchement du détecteur d'intrusion active le premier émetteur (4) et le premier microphone qui transmettent les signaux au second récepteur et au second haut-parleur (10) portés par l'utilisateur qui peut entendre les sons captés par le premier microphone (3).

3. Dispositif selon les revendications 1 et 2 caractérisé en ce que entre le second émetteur hertzien (12) extérieur au véhicule et le second microphone (11) un interrupteur (13) permet la diffusion instantanée d'un message vocal par l'utilisateur à travers le premier récepteur (6) et le premier haut-parleur (7) internes au véhicule.

4. Dispositif selon la revendication 1 caractérisé en ce que il est relié au détecteur d'intrusion et au premier émetteur hertzien (4) et que le deuxième récepteur hertzien portable (9) possède une fonction de modulation des signaux provenant de la caméra et que ce signal est transmis à un moniteur vidéo portable (15) et/ou à une imprimante (16) couplés au récepteur portable.

## Claims

1. Device for protecting vehicles or moving objects (1) comprising, within the vehicle, an intrusion detector (2), a first radio-frequency transmitter (4) electrically connected to the intrusion detector and transmitting a radio-frequency signal when it receives an intrusion signal coming from the intrusion detector, a first microphone (3) connected to the first radio frequency transmitter (4), a first radio-frequency receiver (6) and a first loudspeaker (7) connected to said receiver and, outside the vehicle, a second portable radio-frequency receiver (9) adapted so as to receive the signals transmitted by the first radio-frequency transmitter (4), a second loudspeaker (7) connected to the second radio-frequency receiver (9) and a second radio-frequency transmitter (12) and a second microphone, the first and second transmitters and receivers being linked by the antennae (5) et (8), characterised in that it comprises a video camera or a still camera with an electronic sensor inside the vehicle and in that the first and second transmitters and the first and second receivers are set up so as to function at a first and a second frequency, the first frequency being a sound-carrier frequency, the second being a frequency capable of transmitting a modulated digital signal.

2. Device according to Claim 1 characterised in that the triggering of the intrusion detector activates the first transmitter (4) and the first microphone, which transmit the signals to the second receiver and to the second loudspeaker (10) carried by the user, who can hear the sounds detected by the first microphone (3).

3. Device according to Claims 1 and 2 characterised in that, between the second radio-frequency transmitter (12) outside the vehicle and the second microphone (11), a switch (13) allows the instant broadcasting of a voice message by the user via the first receiver (6) and the first loudspeaker (7) inside the vehicle.

4. Device according to Claim 1 characterized in that it is connected to the intrusion detector and to the first radio-frequency transmitter (4) and that the second portable radio-frequency receiver (9) has a function of modulating the signals coming from the camera and that this signal is transmitted to a portable video monitor (15) and/or a printer (16) coupled to the portable receiver.

## Patentansprüche

1. Diebstahlsicherungseinrichtung für Fahrzeuge (1), die im Fahrzeug einen Einbruchsdetektor (2), einen ersten Funksender (4), der elektrisch mit dem Einbruchsdetektor verbunden ist und bei Empfang eines vom Einbruchsdetektor kommenden Einbruchssignals ein Funksignal aussendet, ein erstes Mikrofon (3), das mit dem ersten Funksender (4) verbunden ist, einen ersten Funkempfänger (6) und einen ersten, mit diesem Empfänger verbundenen Lautsprecher (7) und außerhalb des Fahrzeugs einen tragbaren zweiten Funkempfänger (9), der zum Empfang der vom ersten Funksender (4) ausgesandten Signale eingerichtet ist, einen mit dem zweiten Funkempfänger (9) verbundenen zweiten Lautsprecher (7) und einen zweiten Funksender (12) und ein zweites Mikrofon aufweist, wobei die ersten und zweiten Sender und Empfänger mittels Funkantennen (5) und (8) verbunden sind, **dadurch gekennzeichnet, daß** sie im Fahrzeug eine Videokamera oder einen Fotoapparat mit elektronischer Aufnahme aufweist, und daß die ersten und zweiten Sender und die ersten und zweiten Empfänger so eingerichtet sind, daß sie auf einer ersten und zweiten Frequenz arbeiten, wobei die erste Frequenz eine Trägerfrequenz für Ton und die zweite eine Frequenz ist, die ein moduliertes numerisches Signal übertragen kann.

2. Einrichtung nach Anspruch 1, **dadurch gekennzeichnet, daß** die Auslösung des Einbruchsdetektors den ersten Sender (4) und das erste Mikrofon aktiviert, die die Signale dem zweiten Empfänger und dem zweiten Lautsprecher (10) übermitteln, welche vom Benutzer getragen sind, der die vom ersten Mikrofon (3) aufgenommenen Töne hören kann.

3. Einrichtung nach den Ansprüchen 1 und 2, **dadurch gekennzeichnet, daß** zwischen dem außerhalb des Fahrzeugs befindlichen zweiten Funksender (12) und dem zweiten Mikrofon (11) ein Schalter (13) die sofortige Übertragung einer Sprachmitteilung vom Benutzer durch den ersten Empfänger (6) und den ersten Lautsprecher (7) ermöglicht, die sich im Fahrzeug befinden.

4. Einrichtung nach Anspruch 1, **dadurch gekennzeichnet, daß** sie mit dem Einbruchsdetektor und dem ersten Funksender (4) verbunden ist und daß der tragbare zweite Funkempfänger (9) eine Funktion zur Modulation von von der Kamera kommenden Signalen aufweist und daß dieses Signal an einen tragbaren Video-Monitor (15) und/oder an ein Aufzeichnungsgerät (16) übermittelt wird, die mit dem tragbaren Empfänger gekuppelt sind.
